# EUROPÄISCHE PATENTSCHRIFT

(11) **EP 3 320 199 B1**
(45) Veröffentlichungstag und Bekanntmachung des Hinweises auf die Patenterteilung: **08.05.2019**
(21) Anmeldenummer: 16727708.6
(22) Anmeldetag: 08.06.2016
(51) Int. Cl.: F02D 13/02, F02D 13/06, F02D 17/02

(54) **VERFAHREN ZUR WIRKUNGSGRADOPTIMIERTEN UMSCHALTUNG EINER VIERTAKT-BRENNKRAFTMASCHINE MIT MEHREREN ZYLINDERN UND VOLLVARIABLEM VENTILTRIEB ZWISCHEN EINEM VOLL-ZYLINDERBETRIEB UND TEIL-ZYLINDERBETRIEB**
METHOD FOR EFFICIENCY OPTIMISED SWITCHING OF A FOUR STROKE INTERNAL COMBUSTION ENGINE WITH SEVERAL CYLINDERS AND FULLY VARIABLE VALVE DRIVE BETWEEN A FULL CYLINDER OPERATION AND REDUCED CYLINDER OPERATION
PROCÉDÉ POUR LA COMMUTATION OPTIMISÉE D'UN MOTEUR A COMBUSTION INTERNE À QUATRE TEMPS AYANT PLUSIEURS CYLINDRES ET UN SYSTÉME ENTIÈREMENT VARIABLE D'ENTRAÎNEMENT DE SOUPAPE ENTRE UNE OPÉRATION À TOUTS CYLINDRES ET UNE OPERATION À CYLINDRES REDUITS

(30) Priorität: 08.07.2015 DE 102015111056
(43) Veröffentlichungstag der Anmeldung: 16.05.2018
(73) Patentinhaber: Volkswagen Aktiengesellschaft, 38440 Wolfsburg (DE)
(72) Erfinder: HEINS, Sebastian, 38106 Braunschweig (DE); GRAJEWSKI, Volker, 29369 Ummern (DE)
(74) Vertreter: Freischem & Partner Patentanwälte mbB
(86) Internationale Anmeldenummer: PCT/EP2016/063018
(87) Internationale Veröffentlichungsnummer: WO 2017/005445

(56) Entgegenhaltungen:
- EP-A2- 1 298 300
- DE-A1-102010 062 319
- "MTZ - Motortechnische Zeitschrift" In: "Mechanisch vollvariabler Ventiltrieb und Zylinderabschaltung", 1. April 2013 (2013-04-01), XP002760684, Seiten 334-341, in der Anmeldung erwähnt Abbildungen 5,8,9

## Beschreibung

Die Erfindung betrifft ein Verfahren zur wirkungsgradoptimierten Umschaltung einer Viertakt-Brennkraftmaschine mit mehreren Zylindern und vollvariablem Ventiltrieb zwischen einem Voll-Zylinderbetrieb und Teil-Zylinderbetrieb. Mit anderen Worten ausgedrückt, ist die Viertakt-Brennkraftmaschine dazu ausgebildet, dass mindestens ein Zylinder abgeschaltet und der Hub der Einlassventile und Auslassventile dieses mindestens einen Zylinders auf eine Nullhubstellung eingestellt werden kann.

Aus DE 10 2012 006 983 A1 sind eine mechanisch steuerbare Ventiltriebanordnung, eine Brennkraftmaschine sowie ein Verfahren zum Betreiben einer Brennkraftmaschine bekannt. Bei der beschriebenen Brennkraftmaschine und dem Verfahren sollen die Einlassventile aller Zylinder bei einem ansteigenden Drehmoment im Leerlaufbereich mit einer gleichen, steigenden Hubhöhe betrieben werden. Im Übergangsbereich zwischen dem Leerlaufbereich und einem Teillastbereich sollen die Einlassventile einer Hälfte der Zylinder mit steigender Hubhöhe und die Einlassventile der anderen Hälfte der Zylinder mit sich verringernder Hubhöhe betrieben werden. Im Teillastbereich sollen die Einlassventile einer Hälfte der Zylinder mit steigender Hubhöhe und die Einlassventile der anderen Hälfte der Zylinder mit Nullhub betrieben werden. Im Übergangsbereich zwischen dem Teillastbereich und dem Vollastbereich sollen die Einlassventile einer Hälfte der Zylinder mit sich verringernde Hubhöhe und die Einlassventile der anderen Hälfte der Zylinder mit steigender Hubhöhe betrieben werden. Im Vollastbereich selbst sollen alle Einlassventile aller Zylinder mit einer gleichen, steigenden Hubhöhe betrieben werden. Die DE 10 2012 006 983 A1 nimmt keinen Bezug auf etwaige Veränderungen der Schließzeitpunkte der Einlassventile und/oder des Zündzeitpunkts.

In dem Artikel "Mechanisch vollvariabler Ventiltrieb und Zylinderabschaltung", veröffentlicht auf den Seiten 334-341 in der Ausgabe 04/2013 der "MTZ - Motortechnische Zeitschrift", im Internet herunterladbar unter http://www.springerprofessional.de/mechanisch-vollvariablerventiltrieb-und-zylinderabschaltung/4049996.html, ist ein Verfahren zum Umschalten einer 4-Zylinder-Brennkraftmaschine von einem 4-Zylinderbetrieb in einen 2-Zylinderbetrieb beschrieben, gemäß welchem im drosselfreien 4-Zylinderbetrieb gestartet wird, dann unter Verwendung der Drosselklappe zur Begrenzung der Zylinderverstellung und zur Vermeidung eines Lastsprungs eine Ventilhubverstellung vorgenommen wird und dabei der Zündwinkel auf eine optimale Lage des Verbrennungsschwerpunkts hin eingestellt wird. Zu einem späteren Zeitpunkt der Umschaltung, d.h. noch vor Erreichen des Punkts, an dem die Kraftstoffeinspritzung an zwei Zylindern abgeschaltet wird, wird durch erneutes Öffnen der Drosselklappe und Spätverstellung des Zündwinkels eine Drehmomentreserve erzeugt. Beim Abschalten der Kraftstoffeinspritzung soll dann der Zündwinkel simultan nach früh verstellt werden, um einen Drehmomentsprung zu vermeiden. Anschließend sollen zunächst die Auslassventile und anschließend die Einlassventile durch Verdrehen von Stellwellen stillgelegt werden. Abschließend soll dann durch weiteres Drehen einer Einlassstellwelle der Lastpunkt drosselfrei eingestellt werden.

Aus EP 1 298 300 A2 ist ein Verfahren zum Betreiben einer Viertakt-Brennkraftmaschine mit mehreren Zylindern, einem vollvariablen Ventiltrieb und mindestens einem Phasensteller zur Veränderung des Zeitpunkts des maximalen Ventilhubs der Einlassventile gemäß dem Oberbegriff des Anspruchs 1 bekannt.

Der Erfindung liegt die Aufgabe zugrunde, ein Verfahren zum Betreiben einer Viertakt-Brennkraftmaschine mit mehreren Zylindern und vollvariablem Ventiltrieb zur Verfügung zu stellen, mittels welchem der Wirkungsgrad während der Umschaltung zwischen einem Voll-Zylinderbetrieb und Teil-Zylinderbetrieb erhöht werden kann.

Die Lösung der Aufgabe erfolgt erfindungsgemäß mit einem Verfahren mit den Merkmalen des Anspruchs 1. Weitere praktische Ausführungsformen und Vorteile der Erfindung sind in Verbindung mit den abhängigen Ansprüchen beschrieben.

Ein erfindungsgemäßes Verfahren betrifft das Betreiben einer Viertakt-Brennkraftmaschine mit mehreren Zylindern, einem vollvariablen Ventiltrieb und mindestens einem Phasensteller zur Veränderung des Zeitpunkts des maximalen Ventilhubs der Einlassventile. Unter einem vollvariablen Ventiltrieb wird verstanden, dass die Ventile zumindest teilweise zwischen einer Nullhubstellung (Ventil bleibt während eines Zyklus geschlossen) und einer Maximalhubposition (Ventil öffnet sich während eines Zyklus mit maximalem Verfahrweg) verstellbar sind, vorzugsweise kontinuierlich, so dass zwischen der Nullhubstellung und der Maximalhubposition jeder beliebige Hub des Ventils einstellbar ist. Dabei ist die Brennkraftmaschine dazu ausgebildet, zwischen einem Voll-Zylinderbetrieb und einem Teil-Zylinderbetrieb umgeschaltet werden zu können, wobei im Teil-Zylinderbetrieb mindestens ein Zylinder abgeschaltet wird und dazu die Ventile (insbesondere die Einlassventile, vorzugsweise die Einlassventile und die Auslassventile) dieses Zylinders in eine Nullhubstellung verfahren werden und die übrigen Zylinder weiterlaufen. Mit der Formulierung "Umschaltung zwischen einem Voll-Zylinderbetrieb und einem Teil- Zylinderbetrieb" ist gemeint, dass die Brennkraftmaschine in beide Richtungen verstellbar ist, d.h. von dem Voll-Zylinderbetrieb, bei dem alle Zylinder betrieben werden, in den Teil-Zylinderbetrieb, in welchem mindestens ein Zylinder abgeschaltet ist, als auch umgekehrt, d.h. von dem Teil-Zylinderbetrieb in den Voll-Zylinderbetrieb. Während der Umschaltung zwischen Voll-Zylinderbetrieb und Teil-Zylinderbetrieb wird gemäß dem erfindungsgemäßen Verfahren der Ventilhub der Einlassventile aller Zylinder temporär auf Maximalhubposition eingestellt, wobei während der Umschaltung der Brennkraftmaschine zwischen dem Voll-Zylinderbetrieb und dem Teil-Zylinderbetrieb
a) in einer frühen Umschaltphase an allen Zylindern der Ventilhub vergrößert (vorzugweise während der gesamten frühen Umschaltphase bis zur Maximalhubposition) und gleichzeitig der Zeitpunkt des maximalen Ventilhubs mittels Phasensteller nach früh verstellt wird und/oder
b) in einer späten Umschaltphase zumindest an den Zylindern, die nach der Umschaltung weiterlaufen sollen, der Ventilhub verkleinert und gleichzeitig der Zeitpunkt des zyklusinternen maximalen Ventilhubs nach spät verstellt wird.

Mit dem maximalen Ventilhub ist das jeweils innerhalb eines Zyklus auftretende und somit das zyklusinterne (lokale) Maximum des Ventilhubs gemeint. Dieser Ventilhub kann geringer sein als der - absolut betrachtet - maximal einstellbare Ventilhub (Maximalhub). Mit der Angabe, dass die Einlassventile aller Ventile während der Umschaltung temporär auf Maximalhubposition eingestellt werden, wurde bereits angedeutet, dass das erfindungsgemäße Verfahren insbesondere für solche Brennkraftmaschinen entwickelt wurde, bei denen mittels einer Steuerwelle und an dieser ausgebildeten Steuerprofilen der Ventilhub mechanisch einstellbar ist. Üblicherweise besteht bei solchen Brennkraftmaschinen die einzige technisch sinnvolle Lösung zur Umschaltung zwischen einem Voll-Zylinderbetrieb und einem Teil-Zylinderbetrieb darin, dass sämtliche Einlassventile über die Maximalhubposition verfahren werden, um entweder eine Abschaltung eines Zylinders oder mehrerer Zylinder und die Einstellung einer Nullhubstellung an den zugehörigen Ventilen zu bewirken oder - bei Reaktivierung abgeschalteter Zylinder - um die Abschaltung rückgängig zu machen. Auf Einzelheiten hierzu wird in Verbindung mit der Figurenbeschreibung noch eingegangen. Dem erfindungsgemäßen Verfahren liegt die durch Simulationsberechnungen und Versuche gewonnene Erkenntnis zugrunde, dass durch die gleichzeitige Veränderung des Ventilhubs und des Zeitpunkts des maximalen Ventilhubs gemäß den Verfahrensmerkmalen a) und b) eine effiziente Verbrennung erzielt werden kann.

Dabei ist es vorteilhaft, wenn nach Verfahrensschritt a) und/oder vor Verfahrensschritt b) des Anspruchs 1 während einer mittleren Umschaltphase bei konstantem Ventilhub, insbesondere mit Maximalhub, ein Soll-"Einlass-schließt"-Zeitpunkt zumindest an den Zylindern eingestellt wird, die nach der Umschaltung weiterlaufen sollen. Eine solche Einstellung kann insbesondere mit Hilfe des Phasenstellers der Brennkraftmaschine durchgeführt werden. Ein besonders einfacher Aufbau einer Brennkraftmaschine ergibt sich, wenn jeweils alle Einlassventile gleichzeitig verstellt werden.

Besonders gute Ergebnisse bei der Durchführung eines erfindungsgemäßen Verfahrens werden erzielt, wenn sich die Umschaltphase über mehrere Motorzyklen von jeweils 720° Kurbelwelle (KW) erstreckt und der Phasensteller derart gesteuert wird, dass die während der frühen Umschaltphase und/oder während der späten Umschaltphase innerhalb eines Zyklus einströmende Luftmasse innerhalb eines Toleranzbereichs konstant bleibt. Als Toleranzbereiche geeignet sind insbesondere Abweichungen der Luftmasse innerhalb eines Zylinders während der einzelnen Umschaltungsphasen von +/-10%, vorzugsweise +/-5%, weiter vorzugsweise +/-4% und besonders bevorzugt maximal +/- 3%. Der Toleranzbereich kann aber auch kleiner festgelegt werden, beispielsweise auf +/-2% oder auf +/-1%.

Die vorstehend beschriebene Funktion kann in der Praxis insbesondere dadurch umgesetzt werden, dass der Phasensteller während der frühen Umschaltphase und/oder während der späten Umschaltphase synchron zum Ventilhub verstellt wird, um die Luftmasse innerhalb eines Toleranzbereichs konstant zu halten.

Das erfindungsgemäße Verfahren ermöglicht es, den Zündwinkel oder Einspritzzeitpunkt, insbesondere auch während der frühen Umschaltphase und/oder während der späten Umschaltphase wirkungsgradoptimiert einzustellen, d.h. es ist bei dem erfindungsgemäßen Verfahren insbesondere nicht erforderlich, einen wirkungsgradsenkenden Zündwinkel einzustellen, um die Last der Brennkraftmaschine auf diesem Wege zu reduzieren.

Darüber hinaus ermöglicht es das erfindungsgemäße Verfahren, die Drosselklappe, insbesondere während der frühen Umschaltphase und/oder während der späten Umschaltphase, vollständig geöffnet zu halten und somit mit einem teilweisen Schließen der Drosselklappe verbundene Drosselverluste zu vermeiden.

Wie bereits erwähnt, bietet das erfindungsgemäße Verfahren insbesondere bei einer mechanischen Verstellung des Ventilhubs mittels mindestens einer Steuerwelle und an dieser Steuerwelle ausgebildeten Steuerwellenprofilen große Vorteile, da es speziell für diesen Anwendungsfall entwickelt wurde. Ein weiterer Vorteil der Verwendung derartiger Steuerwellen ist, dass diese bereits seit einiger Zeit erprobt sind und solche Steuerwellen aufgrund ihres relativ einfachen Aufbaus eine hohe Funktionssicherheit aufweisen.

Das Vorstehende gilt insbesondere, wenn die Verstellung des Ventilhubs aller Einlassventile und/oder Auslassventile der Brennkraftmaschine bei einem erfindungsgemäßen Verfahren mit einer einzigen Steuerwelle erfolgt.

Es wird darauf verwiesen, dass die Erfindung insbesondere für Brennkraftmaschinen entwickelt wurde, bei welchen der Ventilhub aller Zylinder zwischen einer Nullhubstellung oder einem nahezu sehr kleinen, (nahezu) funktionslosen Hub, beispielsweise von maximal 1 mm, und einem Maximalhub einstellbar sind. Ferner wurde die Erfindung insbesondere für sogenannte quantitätsgeregelte Motoren gemacht, d.h. für solche Motoren, deren Last über die Luftmenge geregelt wird und die im Regelfall aus diesem Grund über eine Drosselklappe verfügen.

Weitere praktische Ausführungsformen der Erfindung sind nachfolgend im Zusammenhang mit den Zeichnungen beschrieben. Es zeigen:
- Fig. 1: ein Diagramm, in welchem der Ventilhub einer ersten Zylindergruppe und der Ventilhub einer zweiten Zylindergruppe einer Brennkraftmaschine in Abhängigkeit der Zeit t während einer Umschaltung vom Voll-Zylinderbetrieb in den Teil-Zylinderbetrieb dargestellt ist
- Fig. 2: die qualitative Verstellung des Maximums des Ventilhubs sowie des Schließzeitpunkts des Einlassventils (Einlass schließt) in Abhängigkeit der Zeit korrespondierend zu der Zeitachse in Figur 1 und
- Fig. 3: in den Darstellungen a1) bis a3) den Verlauf des Ventilhubs einschließlich Schließzeitpunkt des Einlassventils eines weiterlaufenden Zylinders einer Brennkraftmaschine, die mit einem Verfahren gemäß Stand der Technik betrieben wird, während drei verschiedener Umschaltphasen sowie in den Darstellungen b1) bis b3) den Verlauf des Ventilhubs einschließlich Schließzeitpunkt des Einlassventils eines weiterlaufenden Zylinders einer Brennkraftmaschine, die mit einem erfindungsgemäßen Verfahren betrieben wird, während der drei Phasen eines Umschaltvorgangs.

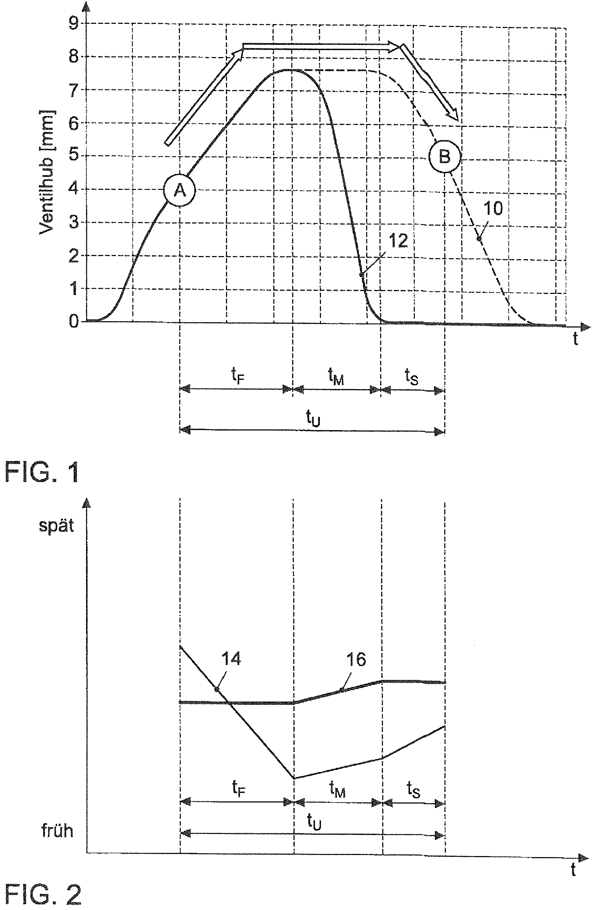

In den Figuren 1 und 2 ist am Beispiel einer Vier-Zylinder-Brennkraftmaschine dargestellt, wie mit dem erfindungsgemäßen Verfahren zwei der vier Zylinder abgeschaltet werden können, so dass die Brennkraftmaschine statt in einem Voll-Zylinderbetrieb mit vier Zylindern in einem Teil-Zylinderbetrieb mit zwei Zylindern betrieben werden kann.

In Figur 1 sind zwei Kurven 10, 12 für den Verlauf des auf der y-Achse angetragenen, eingestellten Ventilhubs in [mm] über der Zeit t dargestellt, wobei die Kurve 10 den Ventilhub der Zylinder 1 und 4 und die Kurve 12 den Ventilhub der Zylinder 2 und 3 darstellt. An dem Beispiel aus den Figuren 1 und 2 soll gezeigt werden, wie gemäß dem erfindungsgemäßen Verfahren eine Umschaltung vom Voll-Zylinderbetrieb in den Teil-Zylinderbetrieb durchgeführt werden kann. In den eingetragenen Betriebspunkten A und B ist der Lastzustand der Brennkraftmaschine der gleiche, wobei die Last im Betriebspunkt A von allen vier Zylindern der Brennkraftmaschine aufgebracht wird und im Betriebspunkt B nur von den Zylindern 1 und 4, denn in diesem Betriebspunkt ist für die Zylinder 2 und 3 eine Nullhubstellung eingestellt, d.h. die Ventile bleiben während des gesamten Motorzyklus geschlossen.

Die Umschaltung von Betriebspunkt A zu Betriebspunkt B erfolgt im Zeitraum tu, der sich über ca. 10 Motorzyklen erstreckt. Der Zeitraum tu wiederum teilt sich auf in eine frühe Umschaltungsphase t_{F}, eine mittlere Umschaltphase t_{M} und eine späte Umschaltphase ts. In der frühen Umschaltphase t_{F} wird der Ventilhub aller vier Zylinder auf Maximalhub verstellt. In der mittleren Umschaltphase t_{M} bleibt der Ventilhub der Einlassventile der Zylindern 1 und 4, die nach dem Umschaltvorgang weiter betrieben werden sollen, gemäß der Kurve 10 auf Maximalhub eingestellt, während der Ventilhub der Einlassventile der Zylinder 2 und 3, die nach der Umschaltung abgeschaltet werden sollen, auf Nullhubstellung eingestellt wird. In der späten Umschaltphase t_{S} wird der Hub der Einlassventile der Zylinder 1 und 4 so weit reduziert, dass die gewünschten Zielsteuerzeiten erreicht werden. Es wird in dieser Umschaltphase vorzugsweise angestrebt, den Lastzustand des Motors während der gesamten Umschaltung konstant zu halten..

Figur 2 stellt die Kurve 14 den qualitativen Verlauf der Verstellung des jeweils zyklusinternen Maximums des Ventilhubs dar. Die Kurve 16 stellt den qualitativen Verlauf der Verstellung des Schließzeitpunkts des Einlassventils ("Einlass schließt") dar.

Wie aus einer Zusammenschau der Figuren 1 und 2 zu erkennen ist, wird das (jeweils zyklusinterne) Maximum des Ventilhubs in der frühen Umschaltphase t_{F} derart nach früh (siehe y-Achse in Figur 2) verstellt, dass der Schließzeitpunkt in dieser Umschaltphase konstant bleibt.

Während der mittleren Umschaltphase t_{M} werden sowohl der Schließzeitpunkt des Einlassventils ("Einlass schließt") als auch das Maximum des Ventilhubs nach spät verstellt, und zwar so weit, dass genau der Soll-"Einlass-schließt"-Wert eingestellt ist, welcher für den Betriebspunkt B erforderlich ist.

Während der späten Umschaltphase t_{S} wird dann während der Reduzierung des Ventilhubs gemäß Kurve 10 in Figur 1 das zyklusinterne Maximum des Ventilhubs der Zylinder 1 und 4 derart nach spät verstellt, dass der Schließzeitpunkt des Einlassventils (Einlass schließt) wiederum konstant bleibt.

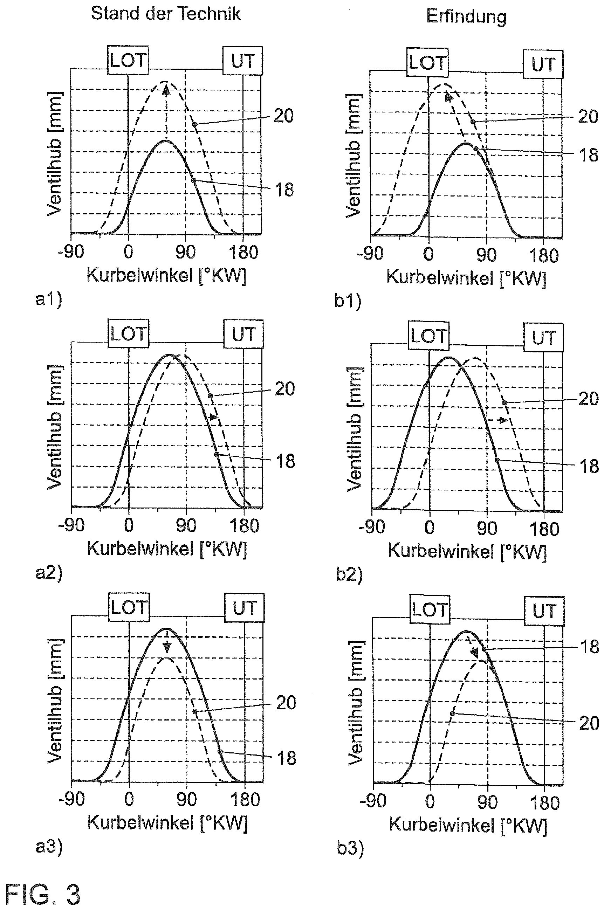

In der Figur 3 sind mit den jeweiligen Teildarstellungen a1)-a2)-a3) bzw. b1)-b2)-b3) konkrete Ventilhubveränderungen an einem der Zylinder 1 bzw. 4 während der einzelnen Umschaltphasen dargestellt, wobei die Teildarstellungen a1)-a2)-a3) Umschaltphasen gemäß dem Stand der Technik zeigen, insbesondere wie diese in dem eingangs genannten MTZ-Artikel beschrieben sind, und die Teildarstellungen b1)-b2)-b3) einzelne Umschaltphasen eines erfindungsgemäßen Verfahrens darstellen.

In den Teildarstellungen ist der Ventilhub zu Beginn der jeweiligen Phase als durchgezogene Linie 18 dargestellt und zum Ende der jeweiligen Phase als gestrichelte Kurve 20. Die gestrichelte Kurve 20 einer Teildarstellung wurde dann zur Visualisierung der Kontinuität in der jeweiligen darunter wiedergegebenen Folge-Teildarstellung als durchgezogene Kurve 18 dargestellt, da sie in dieser Teildarstellung den Beginn der nächsten Phase darstellt.

Die Teildarstellungen a1) und b1) zeigen jeweils die frühe Umschaltphase, die Teildarstellungen a2) und b2) jeweils die mittlere Umschaltphase und die Teildarstellungen a3) und b3) jeweils die späte Umschaltphase.

Wie zu erkennen ist, wird gemäß dem aus dem Stand der Technik bekannten Verfahren sowohl in der frühen Umschaltphase als auch in der späten Umschaltphase ausschließlich der Ventilhub verstellt, was zu einem sich verstellenden Schließzeitpunkt des Einlasses führt. Dies wiederum führt dazu, dass eine zu hohe Luftmasse in die Zylinder strömt, was durch eine den Wirkungsgrad verschlechternde Verstellung des Zündwinkels (Zündzeitpunkts) und/oder durch einen ebenfalls Wirkungsgrad verschlechternden Einsatz der Drosselklappe kompensiert wird.

Bei dem erfindungsgemäßen Verfahren hingegen wird der Schließzeitpunkt der Einlassventile (Einlass schließt) sowohl während der frühen Umschaltphase als auch während der späten Umschaltphase konstant gehalten, wodurch der Zündwinkel optimal gewählt und die Drosselklappe vollständig geöffnet bleiben kann.

Mit LOT und UT sind in Figur 3 der obere Totpunkt während des Ladungswechsels (Ladungswechsel-OT) bzw. der untere Totpunkt eingetragen.

Die Erfindung kann im Rahmen der Ansprüche und unter Berücksichtigung der Kenntnisse des zuständigen Fachmanns variiert werden.

### Bezugszeichenliste

- 10: Kurve (Ventilhub über Zeit, Zylinder 1, 4)
- 12: Kurve (Ventilhub über Zeit, Zylinder 2, 3)
- 14: Kurve (Verstellung des Maximum des Ventilhubs)
- 16: Kurve (Verstellung des Schließzeitpunkts des Einlassventils ("Einlass-schließt")
- 18: Kurve (Verlauf des Ventilhubs zu Beginn der Umschaltphase)
- 20: Kurve (Verlauf des Ventilhubs am Ende der Umschaltphase)

## Patentansprüche

1. Verfahren zum Betreiben einer Viertakt-Brennkraftmaschine mit mehreren Zylindern, einem vollvariablen Ventiltrieb und mindestens einem Phasensteller zur Veränderung des Zeitpunkts des maximalen Ventilhubs der Einlassventile, wobei die Brennkraftmaschine dazu ausgebildet ist, zwischen einem Voll-Zylinderbetrieb und einem Teil-Zylinderbetrieb umgeschaltet werden zu können, wobei im Teil-Zylinderbetrieb mindestens ein Zylinder abgeschaltet wird und dazu die Ventile dieses Zylinders in eine Nullhubstellung verfahren werden und die übrigen Zylinder weiterlaufen, wobei während der Umschaltung zwischen Voll-Zylinderbetrieb und Teil-Zylinderbetrieb der Ventilhub der Einlassventile aller Zylinder in einer mittleren Umschaltphase auf Maximalhub eingestellt wird,
**dadurch gekennzeichnet,**
**dass** während der Umschaltung der Brennkraftmaschine zwischen dem Voll-Zylinderbetrieb und dem Teil-Zylinderbetrieb
a) in einer frühen Umschaltphase an allen Zylindern der Ventilhub der Einlassventile vergrößert und gleichzeitig der Zeitpunkt des maximalen Ventilhubs mittels Phasensteller nach früh verstellt wird und/oder
b) in einer späten Umschaltphase zumindest an den Zylindern, die nach der Umschaltung weiterlaufen sollen, der Ventilhub der Einlassventile verkleinert und gleichzeitig der Zeitpunkt des maximalen Ventilhubs nach spät verstellt wird.

2. Verfahren nach Anspruch 1, **dadurch gekennzeichnet, dass** nach Verfahrensschritt a) und/oder vor Verfahrensschritt b) des Anspruchs 1 während einer mittleren Umschaltphase bei konstantem Ventilhub ein Soll-"Einlass-schließt"-Zeitpunkt zumindest an den Zylindern eingestellt wird, die nach der Umschaltung weiterlaufen sollen.

3. Verfahren nach einem oder mehreren der vorstehenden Ansprüche, **dadurch gekennzeichnet, dass** sich die Umschaltphase über mehrere Motorzyklen von jeweils 720° KW erstreckt und der Phasensteller derart gesteuert wird, dass die während der frühen Umschaltphase und/oder während der späten Umschaltphase innerhalb eines Zyklus einströmende Luftmasse innerhalb eines Toleranzbereichs konstant bleibt.

4. Verfahren nach dem vorstehenden Anspruch, **dadurch gekennzeichnet, dass** der Phasensteller während der frühen Umschaltphase und/oder während der späten Umschaltphase synchron zum Ventilhub verstellt wird, um die Luftmasse innerhalb eines Toleranzbereichs konstant zu halten.

5. Verfahren nach einem oder mehreren der vorstehenden Ansprüche, **dadurch gekennzeichnet, dass** der Zündwinkel oder Einspritzzeitpunkt während der frühen Umschaltphase und/oder während der späten Umschaltphase wirkungsgradoptimiert eingestellt wird.

6. Verfahren nach einem oder mehreren der vorstehenden Ansprüche, **dadurch gekennzeichnet, dass** die Drosselklappe während der frühen Umschaltphase und/oder während der späten Umschaltphase vollständig geöffnet ist.

7. Verfahren nach einem oder mehreren der vorstehenden Ansprüche, **dadurch gekennzeichnet, dass** die Verstellung des Ventilhubs mechanisch mittels mindestens einer Steuerwelle und an dieser Steuerwelle ausgebildeten Steuerwellenprofilen erfolgt.

8. Verfahren nach dem vorstehenden Anspruch, **dadurch gekennzeichnet, dass** die Verstellung des Ventilhubs aller Einlassventile und/oder Auslassventile der Brennkraftmaschine mit einer einzigen Steuerwelle erfolgt.

## Claims

1. Method for operating a four stroke internal combustion engine having a plurality of cylinders, a fully variable valve train and at least one phase shifter for changing the time of the maximum valve lift of the inlet valves, the internal combustion engine being configured so as to be capable of being switched over between full cylinder operation and partial cylinder operation, at least one cylinder being switched off in partial cylinder operation and, to this end, the valves of said cylinder being moved into a zero lift position and the remaining cylinders continuing to run, the valve lift of the inlet valves of all cylinders being set in a middle switchover phase to a maximum lift during the switchover between full cylinder operation and partial cylinder operation,
**characterized**
**in that**, during the switchover of the internal combustion engine between the full cylinder operation and the partial cylinder operation,
a) in an early switchover phase, the valve lift of the inlet valves is increased at all cylinders and, at the same time, the time of the maximum valve lift is adjusted in the early direction by means of a phase adjuster, and/or,
b) in a late switchover phase, the valve lift of the inlet valvesis reduced at least at the cylinders which are to continue to run after the switchover, and, at the same time, the time of the maximum valve lift is adjusted in the late direction.

2. Method according to Claim 1, **characterized in that**, after method step a) and/or before method step b) of claim 1, a setpoint "inlet closes" time is set during a middle switchover phase with a constant valve lift, at least at the cylinders which are to continue to run after the switchover.

3. Method according to one or both of the preceding claims, **characterized in that** the switchover phase extends over a plurality of engine cycles of in each case 720° crank angle (CA), and the phase shifter is controlled in such a way that the air mass which flows in within one cycle during the early switchover phase and/or during the late switchover phase remains constant within a tolerance range.

4. Method according to the preceding claim, **characterized in that** the phase shifter is adjusted synchronously with respect to the valve lift during the early switchover phase and/or during the late switchover phase, in order to keep the air mass constant within a tolerance range.

5. Method according to one or more of the preceding claims, **characterized in that** the ignition angle or injection time is set in a manner which is optimized in terms of the degree of efficiency during the early switchover phase and/or during the late switchover phase.

6. Method according to one or more of the preceding claims, **characterized in that** the throttle valve is opened completely during the early switchover phase and/or during the late switchover phase.

7. Method according to one or more of the preceding claims, **characterized in that** the adjustment of the valve lift takes place mechanically by means of at least one control shaft and control shaft profiles which are configured on said control shaft.

8. Method according to the preceding claim, **characterized in that** the adjustment of the valve lift of all inlet valves and/or outlet valves of the internal combustion engine takes place by way of a single control shaft.

## Revendications

1. Procédé pour faire fonctionner un moteur à combustion interne à quatre temps comprenant plusieurs cylindres, une commande de soupapes entièrement variable et au moins un dispositif de réglage de phase destiné à modifier l'instant de la course maximale des soupapes d'admission, le moteur à combustion interne étant réalisé de manière à pouvoir être commuté entre un fonctionnement total des cylindres et un fonctionnement partiel des cylindres, au moins un cylindre étant coupé lors du fonctionnement partiel des cylindres et à cet effet les soupapes de ce cylindre étant déplacées dans une position de course nulle et le reste des cylindres continuant leur course, et au cours de la commutation entre le fonctionnement total des cylindres et le fonctionnement partiel des cylindres, la course des soupapes d'admission de tous les cylindres étant ajustée à une course maximale dans une phase de commutation intermédiaire,
**caractérisé en ce que**
pendant la commutation du moteur à combustion interne entre le fonctionnement total des cylindres et le fonctionnement partiel des cylindres,
a) la course des soupapes d'admission est augmentée dans une phase de commutation précoce au niveau de tous les cylindres et simultanément l'instant de la course maximale des soupapes est réglé en avance au moyen du dispositif de réglage de phase et/ou
b) la course des soupapes d'admission est réduite dans une phase de commutation ultérieure, au moins au niveau des cylindres qui doivent continuer leur course après la commutation et simultanément l'instant de la course maximale des soupapes est réglé en retard.

2. Procédé selon la revendication 1, **caractérisé en ce qu'**après l'étape de procédé a) et/ou avant l'étape de procédé b) de la revendication 1, pendant une phase de commutation intermédiaire avec une course de soupape constante, un instant de "fermeture de l'admission" de consigne est ajusté au moins au niveau des cylindres qui doivent continuer leur course après la commutation.

3. Procédé selon l'une quelconque ou plusieurs des revendications précédentes, **caractérisé en ce que** la phase de commutation s'étend sur plusieurs cycles du moteur à chaque fois de 720° d'angle de vilebrequin et le dispositif de réglage de phase est commandé de telle sorte que la masse d'air affluant pendant la phase de commutation précoce et/ou pendant la phase de commutation ultérieure à l'intérieur d'un cycle reste constante à l'intérieur d'une plage de tolérance.

4. Procédé selon la revendication précédente, **caractérisé en ce que** le dispositif de réglage de phase est réglé pendant la phase de commutation précoce et/ou pendant la phase de commutation ultérieure de manière synchronisée avec la course des soupapes afin de maintenir constante la masse d'air à l'intérieur d'une plage de tolérance.

5. Procédé selon l'une quelconque ou plusieurs des revendications précédentes, **caractérisé en ce que** l'angle d'allumage ou l'instant d'injection est ajusté avec un rendement optimisé pendant la phase de commutation précoce et/ou pendant la phase de commutation ultérieure.

6. Procédé selon l'une quelconque ou plusieurs des revendications précédentes, **caractérisé en ce que** le papillon d'étranglement est complètement ouvert pendant la phase de commutation précoce et/ou pendant la phase de commutation ultérieure.

7. Procédé selon l'une quelconque ou plusieurs des revendications précédentes, **caractérisé en ce que** le réglage de la course de soupape s'effectue mécaniquement au moyen d'au moins un arbre de commande et de profils d'arbre de commande réalisés au niveau de cet arbre de commande.

8. Procédé selon la revendication précédente, **caractérisé en ce que** le réglage de la course de soupape de toutes les soupapes d'admission et/ou de toutes les soupapes d'échappement du moteur à combustion interne s'effectue avec un arbre de commande unique.
